# EUROPEAN PATENT APPLICATION

(11) **EP 1 638 316 A1**
(43) Date of publication of application: **22.03.2006**
(21) Application number: 04292222.9
(22) Date of filing: 15.09.2004
(51) Int. Cl.: H04N 5/225, H04N 5/232

(54) **Camera with movable viewfinder**

(71) Applicant: Thomson Licensing, 92100 Boulogne-Billancourt (FR)
(72) Inventor: Roctus, Jerry, 4567 AL Clinge (NL); Poncin, Charles, 4834 EB Breda (NL); Boneschanscher, Machiel, 5111 VT Baarle-Nassau (NL)
(74) Representative: Arnold, Klaus-Peter

(57) **Abstract**

The camera comprises an electronic viewfinder and a housing (1) with a top surface (2) on which the viewfinder (3) is located via holding elements (4). The viewfinder (3) is connected mechanically via stiff connecting elements (5) to the holding elements (4), the connecting elements (5) each being connected at a first side rotatable to the viewfinder (3) and at a second side rotatable to the holding elements (4).

## Description

### Field of the Invention

The present invention relates to cameras, in particular to television cameras having an electronic viewfinder coupled to the camera. The viewfinder is movable independently with respect to the camera.

### Background of the Invention

A movable viewfinder has the advantage, that the operation of the camera by a camera operator is much more comfortable, in particular, when the viewing angle of the camera is raised upwards or downwards.

A camera with a movable viewfinder is known for example form GB 1249266. For a compact construction, the viewfinder is accommodated in a recess in the upper rear edge of the camera, when the camera is not operated. The viewfinder is connected mechanically to the camera housing via a forklike rod, which is connected at one end to the viewfinder and at the other end to a top surface of the camera housing. The connection includes a rotatable axis at each end sides of the fork, for moving the viewfinder off the camera housing. A similar construction with two rotatable axes is disclosed in US 4,682,240.

### Summary of the Invention

A camera with an electronic viewfinder, embodying an aspect of the invention, comprises a housing with a top surface on which the viewfinder is located via holding elements. The viewfinder is connected mechanically via stiff connecting elements to the holding elements, for allowing rotation around two axes. The connecting elements are in particular connected at a first end side via an axis to the viewfinder and at a second end side via an axis to the holding elements for allowing versatile movements of the viewfinder.

In a further aspect of the invention, the viewfinder is located in a rest position above the top surface with the optical axis of the viewfinder in parallel with the camera viewing axis, with the front part of the viewfinder being located between two holding elements. The construction of the connecting elements and the holding elements is such, that the viewfinder is rotatable beginning the rotation from the rest position around the first axis with an angle of larger 90° and about the second axis rotatable with an angle of larger 30°. When the viewfinder is moved away from the rest position with a larger distance, rotations of larger 135° are possible around both axes.

The camera is in particular a professional movie camera or a professional television camera and allows a user a very flexible use without fatigue during a larger working time.

### Brief Description of the Drawings

Preferred embodiments of the invention are explained in more detail with regard to schematic drawings, which show:
- Fig. 1: a camera with an electronic viewfinder, the viewfinder being located in a rest position;
- Fig. 2-5: the camera shown in Fig. 1, with the viewfinder moved to operating positions.

### Detailed Description of the Preferred Embodiment

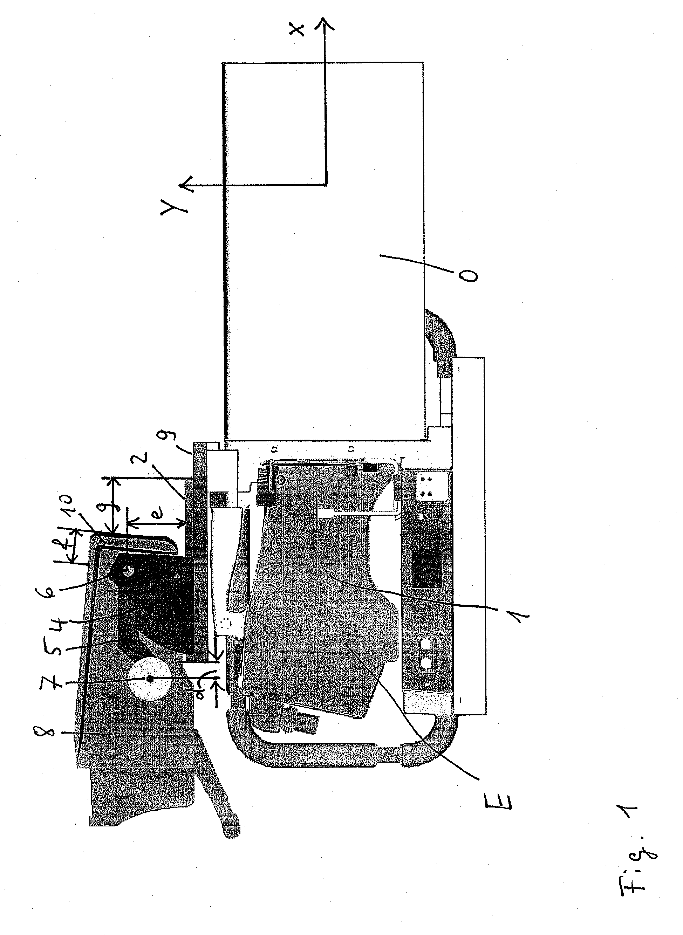

In Fig. 1 a camera is shown comprising a housing 1 and an electronic viewfinder 3 being located above a top surface 2 of the housing. The camera comprises further an optical part O and an electronically part E to which the viewfinder 3 is electrically connected. The camera is in particular a professional television camera or a movie camera.

In a rest position, the viewfinder is located above the top surface 2 as shown in Figure 1 with the optical axis of the viewfinder being in parallel with the camera viewing axis, the x-coordinate. The body of the viewfinder 3 may touch the top surface 2 in this rest position and can be locked in this position for transportation.

The viewfinder 3 is mounted on the top surface 2 via connecting elements 5 and holding elements 4. A connecting element 5 is connected to a holding element 4 at one end via a first axis 6 and via a second opposing end via a second axis 7 to the viewfinder 3, for allowing rotations around both axes. The axis 7 is connected to a sidewall of the viewfinder 3. At the other sidewall of the viewfinder, a same connecting element and holding element are arranged for providing a symmetrical structure and allowing rotations about the axes 6 and 7.

The two holding elements 4 are arranged each in particular at opposing sides of the top surface 2 such, that the front part 10 of the viewfinder 3 is located between the two holding elements 4 in the rest position, as shown in Fig. 1. The rear part of the viewfinder extends over the end of the top surface 2 and the second axis 7 is connected to the sidewall of the viewfinder 3 with a distance d in X direction, for allowing a rotation around the axis 7, when the viewfinder 3 is the rest position. A rotation of larger 30° is possible in the rest position around the axis 7.

The first axis 6 is arranged at the upper part of the holding element 4 above the top surface 2 with a distance e, which is considerably larger than a distance f, with which the viewfinder 3 extends over the axis 6. In the embodiment shown, e is about 2f. Because the viewfinder 3 is arranged on the top surface 2 of the camera housing 1, a rotation larger 90° around the first axis 6 is possible. It is still possible to arrange any indicator lights or a power block (not shown) at a position 9, but because of a free distance g, the movement of the viewfinder 3 is not restricted by such an additional arrangement.

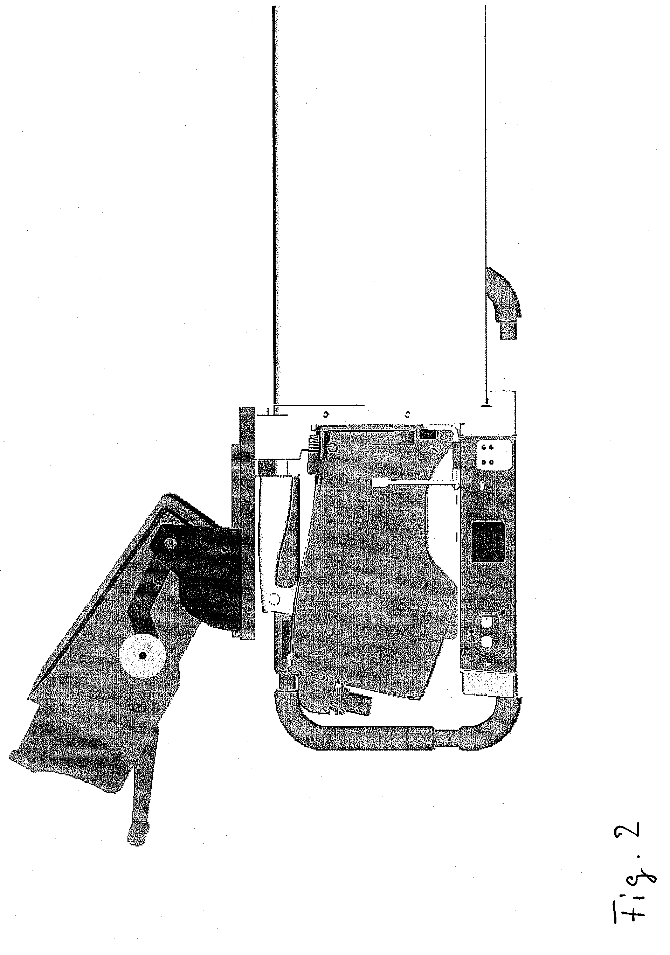

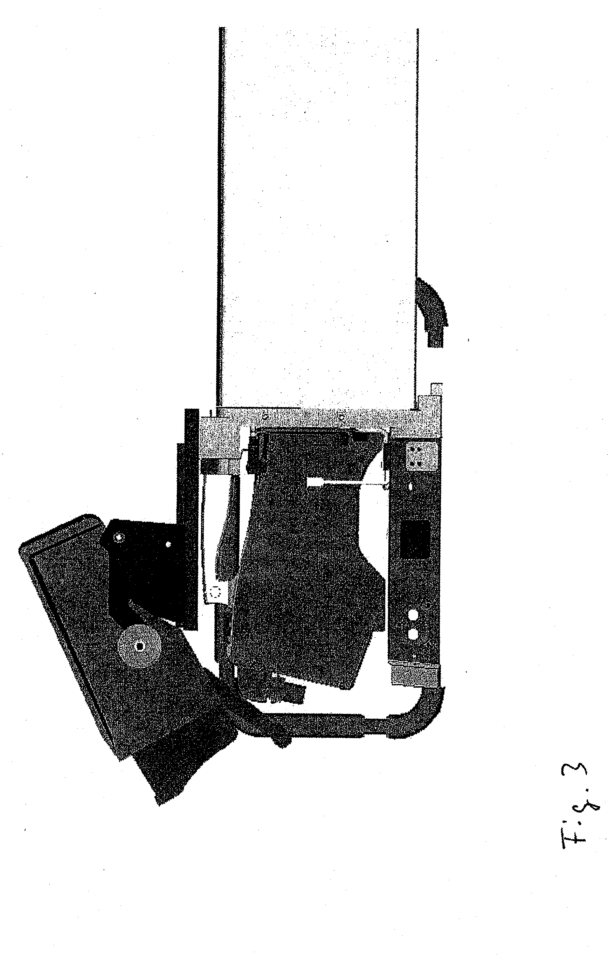

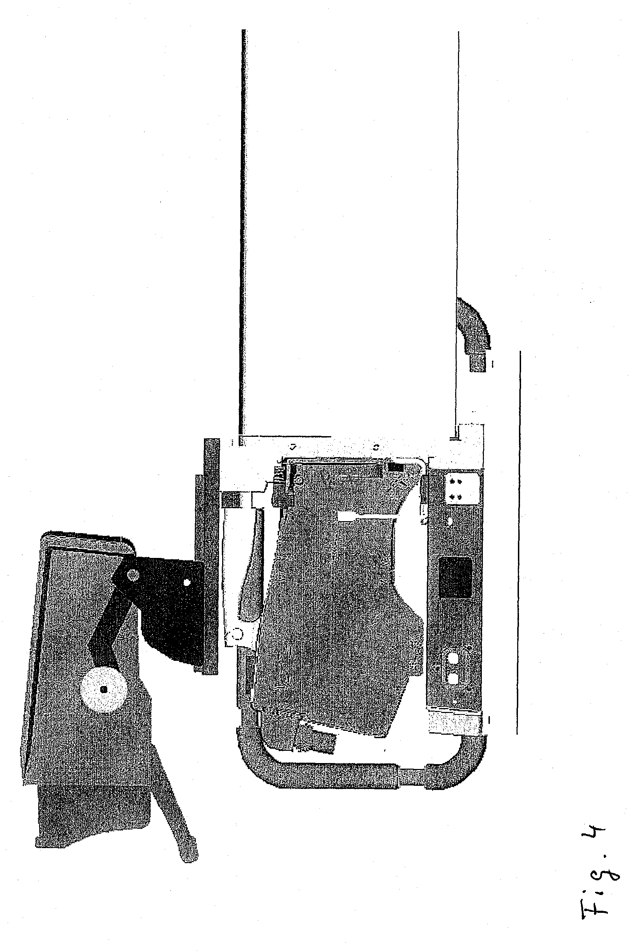

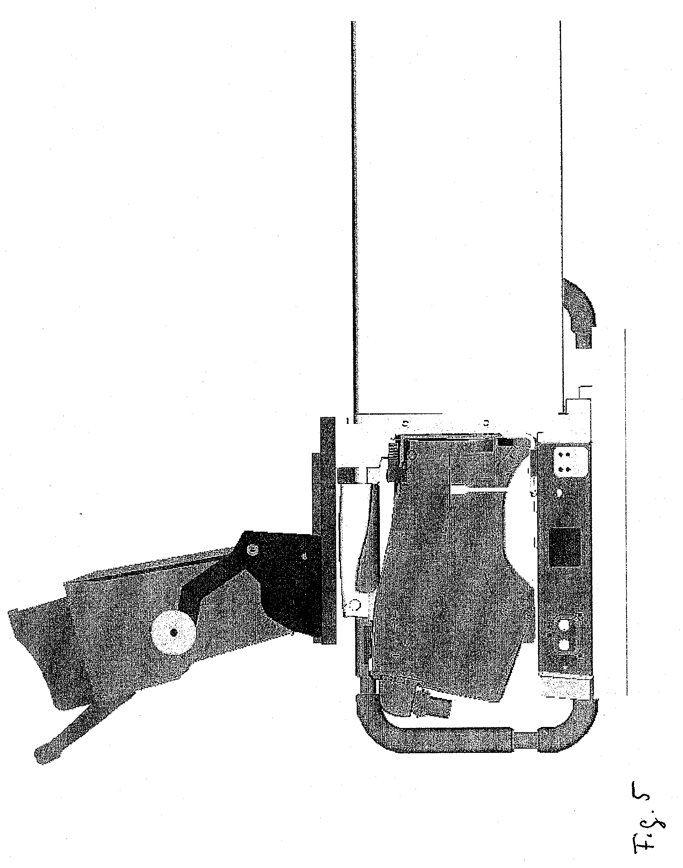

It is therefore possible, to rotate the viewfinder around one of the axes 6, 7 with a large angle, when the viewfinder is still in the rest position. When the viewfinder 3 is moved away in vertical direction y from the top surface 2, the possible rotations around the axes 6, 7 are even larger. As shown in Fig. 2-7, during the operation of the camera a large variation of viewfinder positions is possible during the operation of the camera, for providing a better comfort for a camera user without fatigue during a larger operating time.

## Claims

1. Camera with an electronic viewfinder, the camera comprising a housing (1) with a top surface (2) on which the viewfinder (3) is located via holding elements (4), **characterized in that** the viewfinder (3) is connected mechanically via stiff connecting elements (5) to the holding elements (4), the connecting elements (5) each connected at a first side rotatable to the viewfinder (3) and at a second side rotatable to the holding elements (4).

2. Camera in accordance with claim 1, wherein the viewfinder (3) is connected mechanically at each side wall (8) to a connecting element (5), which are each connected to a holding element (4).

3. Camera in accordance with claim 1 or 2, wherein two connecting elements (5) are each coupled via a first axis (6) with one of the holding elements (4) and via a second axis (7) with the viewfinder for rotatable movements of the viewfinder.

4. Camera in accordance with claim 1, 2 or 3, wherein the viewfinder is arranged for a rest position above the top surface (2) with the optical axis of the viewfinder in parallel with the camera viewing axis (X) .

5. Camera in accordance with claim 4, wherein two connecting elements (5) are each connected via a second axis (7) to opposing side walls of the viewfinder (3) and in the rest position the front part (10) of the viewfinder is located between two holding elements (4) and the two connecting elements (5) .

6. Camera in accordance with claim 4 or 5, wherein the second axis (7) is located at the rear part (8) of the viewfinder and extends the end of the upper plate in the horizontal direction (X) with a first distance (d), for allowing a rotation around the second axis (7), when the viewfinder is in the rest position.

7. Camera in accordance with claim 4, 5 or 6, wherein the first axis (6) is located at the front part (10) and is arranged at the upper part of each holding element (4) with a second distance (e) in the vertical direction (Y), for allowing a rotation around the first axis (6), when the viewfinder is in the rest position.

8. Camera in accordance with claim 7, wherein the viewfinder is mounted on the most upper top surface (2) of the housing or mounted on an upper top surface (2) with a third distance (f) to a power or indicator block for allowing a rotation of larger 90° around the first axis (6) with respect to the rest position.

9. Camera in accordance with one of the preceding claims, wherein the connecting elements (5), the holding elements (4) and the axes (6, 7) are each arranged symmetrically with respect to the side walls of the viewfinder.

10. Camera in accordance with one of the preceding claims, wherein the connecting elements (5) are each connected at a first end side to the viewfinder (3) and at a second, opposing end side to a respective holding element (4).
